(19) **Europäisches Patentamt / European Patent Office / Office européen des brevets**

(11) **EP 1 413 975 B1**

(12) **EUROPEAN PATENT SPECIFICATION**

(45) Date of publication and mention
of the grant of the patent:
**30.05.2007 Bulletin 2007/22**

(51) Int Cl.:
***G06K 11/00*** *(2006.01)* ***G06F 3/033*** *(2006.01)*

(21) Application number: **02257435.4**

(22) Date of filing: **25.10.2002**

(54) **Device and method for an electromagnetic digitizer tablet**

Verfahren und Vorrichtung für ein elektromagnetisches Digitalisiertablett

Procedé et dispositif pour une tablette graphique électromagnétique

(84) Designated Contracting States:
**AT BE BG CH CY CZ DE DK EE ES FI FR GB GR IE IT LI LU MC NL PT SE SK TR**

(43) Date of publication of application:
**28.04.2004 Bulletin 2004/18**

(73) Proprietor: **Waltop International Corp.**
**Taiwan**
**Hsin chu (TW)**

(72) Inventors:
• **Chao, Ching-Chuan**
**Science-Based Industrial Park,**
**Hsinchu (TW)**

• **Hsu, Chung-Wen**
**Science-Based Industrial Park,**
**Hsinchu (TW)**

(74) Representative: **Pratt, David Martin et al**
**Withers & Rogers LLP**
**Goldings House,**
**2 Hays Lane**
**London SE1 2HW (GB)**

(56) References cited:
**EP-A- 0 432 139** **EP-A- 0 694 865**
**US-A- 4 878 553** **US-A- 5 028 745**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

1. **Field of the Invention:**

The invention relates to an improved device and method for the pointer system of a digitizer tablet, particularly to a kind of apparatus improvement for both the wireless-and-batteryless pointer device and the digitizer tablet designed with the well-arranged electromagnetic inductive loops, and also to an improved approach for transmitting power between the wireless-and-batteryless pointer device and the electromagnetic inductive loops.

2. **Background of the Invention:**

As the applications of the information technology are extended widely and quickly, more and more information technology devices are developed and under research. In order to make computer more easily to be operated and used by the operator, more sophisticated and compatible devices for data input and process are also manufactured successively for different computer systems, wherein the most popular devices for the input of tracing point are the cursor device (such as mouse) or the stylus device (such as pen) for a digitizer tablet system.

The well-known digitizer tablet system has several transducer/cursor devices in the form of mouse, puck or pen. In order to find the position of a mouse or a pen on the surface of the digitizer tablet; that is, to calculate the coordinates and the variation of coordinates in a two-dimensional space, one most popular technique in the prior arts is to use the technology of electromagnetic inductive. On the digitizer tablet according to this technique, a plurality of electromagnetic inductive loops are applied to induce the signal from mouse or pen and, by a signal processing circuit and an A/D converter to convert and sample the inducing signal, such that the coordinates of the mouse or pen on the active area of the digitizer tablet are decided, and also are other functions decided, such as: scrolling, clicking, or tracing, etc.

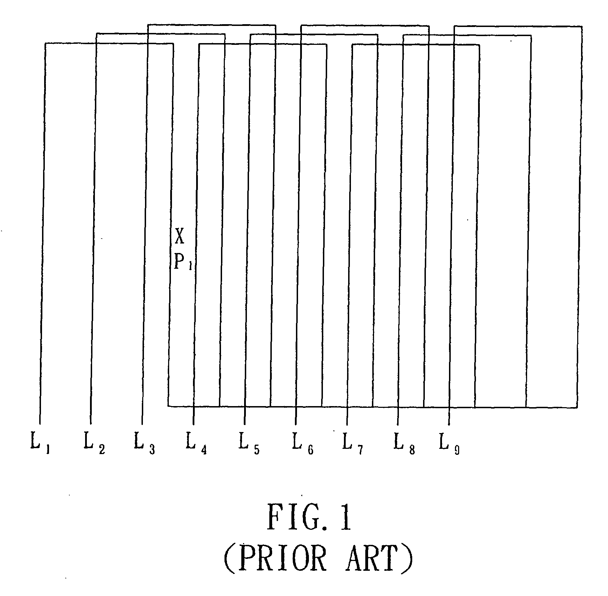

Please refer to Fig. 1, which is an illustration for the part of the electromagnetic inductive loops of the prior digitizer tablet disclosed in the U.S. Patent No. 4878553 and 5028745. As shown in Fig. 1, which is a part of the inductive loops used by the prior digitizer tablet, wherein it includes the electromagnetic inductive loops from L1 to L5. All of the electromagnetic inductive loops L1-L5 are belonged to a specific axis, and the covering range of the inductive loop L1 overlapping another two inductive loops L2, L3; that is, the range enclosed by an inductive loop contains the initial terminals of next two inductive loops and, in other words, the inductive loops L2, L3 are continuous loops to L1, and their covered ranges are overlapped partially. If the position of an pointer device on the active area of a digitizer tablet is P1, then the magnetic field that pointer device emitted on point P1 can be induced by the nearby loops, and the induced currents generated in these loops will be received by analog switches separately and respectively and, according to the magnitudes of these inducing signals, the coordinates of the point P1 is calculated and decided.

As shown in Fig. 1, as in partial scan, if the pointed position of the pointer device is within the loop range of the loop L3 then, for each loop L1 to loop L5, the scan procedures for the pointer device on point P1 on the active area of the digitizer tablet are to emit signals from inductive loops individually, which also receives its own emitted signals from the pointer device in receiving time slot; that is, the signal emitted from L1 will be induced by the pointer device and emitted the signal again from the pointer device and induced by L1, the signal emitted from L2 will be induced by the pointer device and emitted the signal again from the pointer device and induced by L2, the signal emitted from L3 will be induced by the pointer device and emitted the signal again from the pointer device and induced by L3, the signal emitted from L4 will be induced by the pointer device and emitted the signal again from the pointer device and induced by L4, and the signal emitted from L5 will be induced by the pointer device and emitted the signal again from the pointer device and induced by L5; the coordinates of point P1 where the pointer device is located will be calculated according to the magnitude of each signal emitted and induced by respective loops L1~L5, such that the coordinates of the point P 1 and the performed functions are decided. For this prior-art technique, since the coordinates of point P1 where the pointer device is located on the active area of the digitizer tablet is calculated by the signals emitting, inducing, and receiving respectively by each nearby loop of the point P1, the magnitudes of these signals are displayed as a nonlinear relationship. Therefore, this prior technique has the disadvantage that its coordinates calculation approach is too complicated and the number of the applied circuit elements used in coordinates calculating is too many relatively. As a result, the cost is higher and, in the other hand, its' inducing ability is less stable, and apt to couple the noise easily. It is very urgent to solve all these problems.

In addition, one prior-art wireless pointer device (such as stylus) used in the prior digitizer tablet according to the US Patent No. 4878553 and 5028745 utilizes a variable capacitor to the circuit which related the mechanism of the tip's movement, wherein the circuit is parallel with several paralleled capacitors (three capacitors), and the variable capacitor is brought along with the tip of the pointer device, and the key switch of the pointer device is utilized to parallel another capacitor. When operating the pointer device on the tablet surface or pressing it upon the surface of the digitizer tablet, the tip of the pointer device will press the variable capacitor and cause the capacitance change such that, after the pointer device processing a resonant energy storage to the signals coming from the digitizer tablet, the resonant frequency of the electromagnet signals emitted back to digitizer tablet will be slightly changed, and this slight change of frequency is regarded as the phase variation (the greater is the pressure coming from the pointer device, the lower is the frequency and the greater is the phase variation). By detecting and processing the vibration of the phase and the amplitude of the electromagnetic signals transferred from the pointer device, the digitizer tablet may distinguish the pointer device is kept in touch with the surface of the digitizer tablet or within the inductive altitude of the digitizer tablet, and may also know which function the user is desired to perform in that time. When the user presses the key switch of the pointer device, it will make specific capacitor paralleled with resonant circuit, such that it will also cause the frequency of the electromagnetic signals resonated in the pointer device and transferred back to the digitizer tablet to be lowered down and the phase variation to be made greater and, by detecting the variation of phase, the digitiser tablet will be noticed which key switch the user has already passed.

There are several disadvantages for this kind of prior-art technique that processes the resonant frequency (phase) of the pointer device by the manner of changing the capacitance:

(1) From this prior-art technique, the variation of the frequency by the manner of the "variable capacitor" with the tip of the pointer device so, when the pressure applied on the active area of the digitiser tablet by the tip of the pointer device is different, the capacitance of this resonant circuit (variable capacitor) will be enlarged slightly; that is, the variation of the frequency is not very much, so it is relatively difficult to detect the magnitude of the pressure pressed on the active area of the digitiser tablet by the amount of the "frequency variation". Therefore, for the prior-art technique that applied the manner of detecting the "phase change" difference of frequency to decide the pressure pressed by the tip, not only more precise measurement is required, but also the circuit design is complex and the production cost is increased.

(2) For this prior-art technique, no matter when the user presses the key switch of the pointer device or presses down the tip of the pointer device on the active area of the digitiser tablet, they will both cause the resonant frequency of the pointer device to decrease. In order to distinguish both operations of the pen tip and the key switch pressing for avoiding wrong judgement, this prior-art technique has a large range of each frequency variation generated from both the tip and the key switch pressing (frequency difference must be enlarged). Relatively, all the required accuracy and the complexity of the circuit design will be increased for distinguishing the frequency difference, and it is difficult further to lower the cost either

EP-A-0694865 and EP-A-0432139 describe known position detectors.

## Summary of the Invention

An aim of the invention is to provide a set of inductive loops and an approach for emitting and receiving the signal of a wireless pointer device (particularly, a wireless pointer device without a battery).

The present invention provides a signal transmitting method for the pointer system of a digitiser tablet having a wireless pointer device, the digitiser tablet having a plurality of sets of electromagnetic inductive loops arranged in order, and the wireless pointer device having an energy-storing resonant circuit, the method comprising the following steps:

(A) emitting a first signal from an $m^{th}$ set of the electromagnetic inductive loops of the digitiser tablet, and emitting a resonant signal from the energy-storing resonant circuit of the wireless pointer device after resonation and energy storing, m being a positive integer;
(B) receiving the resonant signal with the $(m-n)^{th}$ set of the electromagnetic loops of the digitiser tablet, n being an integer;
(C) increasing the value of (m-n) progressively, repeating steps (A) and (B) until the $(m-n+i)^{th}$ set of the electromagnetic inductive loops receives the resonant signal, i being a positive integer; and
(D) calculating the relative coordinate position of the digitiser tablet of the wireless pointer device according to resonant signals received by the $(m-n)^{th}$ to $(m-n+i)^{th}$ set of the electromagnetic inductive loops of the digitiser tablet; characterised in that

the wireless pointer device has a resonant circuit in which a variable inductance is in parallel with at least two capacitances, the resonant circuit inducting and receiving electromagnetic energy provided by the electromagnetic inductive loops as a source of energy; the wireless pointer device also has a key switch in series connection with one of the capacitances and a pen nib connected with the variable inductance; whereby, when the key switch is switched on, the resonant frequency of the resonant circuit decreases and, when the pen nib is pressed down, variation of the variable inductance increases the resonant frequency of the resonant circuit.

The approach of emitting and receiving the signals of the inductive loops is to emit several signals sequentially from a specific inductive loop which dominated the coordinate detecting range of a wireless pointer device located on the active area of a digitiser tablet, and several nearby inductive loops sequentially, respectively, and inductively receive the resonant signal emitted from the pointer device. Through this kind of processing, the magnitudes of the induced signals are in linear relationship and, according to the linear relationship of the several induced signals, the cursor of the pointer device may be positioned to simplify the calculation formula for the coordinates and the design of the related circuit elements required for coordinate calculating, and it may further reduce the production cost and the power consumption.

Another aim of the invention is to design an pointer device without a battery (such as a pen, a mouse, a puck, etc.)

The invention further provides a pointer system for a digitiser tablet, the system comprising:

a wireless pointer device; and
a digitiser tablet comprising:

an electromagnetic inductive loop having several inductive loops in the X-axis and Y-axis directions of the coordinate system, each electromagnetic loop forming a specific inductive scope;
an analogue switch and selecting circuit connected to the electromagnetic inductive loop, and being able to control induction of the inductive loops in the X-axis and Y-axis directions through a microprocessor, the number of switches being dependent upon the number of the inductive loops;
an amplifying circuit, receiving a suppressing signal from the microprocessor and output inductive signals from the analogue switch and selecting circuit and the electromagnetic inductive loop, the amplifying circuit amplifying and then outputting the signals;
a filtering circuit for receiving a signal output by the amplifying circuit and for outputting a filtered signal to the microprocessor;
a waveform amplitude regulating circuit for receiving the signal output by the filtering circuit, and for outputting an amplitude-regulated signal to the microprocessor;
a frequency/voltage converting circuit for receiving signals output by the filtering circuit, and for converting such signals into voltage signals, and for sending said voltage signals to the microprocessor for processing, the voltage signals being saved temporarily in the microprocessor after being processed;
a power supply circuit for receiving a pulse wave controlling signal and a pulse wave signal of specific frequency output by the microprocessor, and the energy source of the wireless pointer device is supplied by the pulse wave signal of specific frequency and the electromagnetic inductive loop; and
a tri-state driving circuit for receiving the output of the power supply circuit, and for outputting two sets of inverting signals of logical level respectively to the analogue switch and selecting circuit and to the electromagnetic inductive loop for enhancing the pulse wave signal of certain frequency; and

wherein the microprocessor can control and receive signals from the waveform amplitude regulating circuit and the frequency/voltage converting circuit, and can process signals received; characterised in that the wireless pointer device has a resonant circuit in which a variable inductance is in parallel with at least two capacitances, the resonant circuit inducting and receiving electromagnetic energy provided by the inductive loops as a source of energy; the wireless pointer device also having a key switch in series connection with one of the capacitances and a pen nib connected with the variable inductance; whereby, when the key switch is switched on, the resonant frequency of the resonant circuit decreases; and, when the pen nib is pressed down, the variation of the variable inductance increases the resonant frequency of the resonant circuit.

This system includes a resonant circuit comprised of variable inductors and capacitors to induce and receive electromagnetic energy that is resonated, energised and emitted back to the digitiser tablet, such that it may function as the power source of the pointer device of the batteryless type. Further, when the user operates the pen type pointer device to press the pen tip on the digitiser tablet, the variable inductor is designed to increase the resonant frequency and, when the user presses the key switch on the pointer device, it will decrease the resonant frequency. Since the difference in the variation of frequency (one is an increase of frequency, and the other is a decrease of frequency) when the pen tip is pressed on the digitiser tablet or the key switch is operated so, not only may the system of the invention easily judge which function the user is operating for reducing the probability of a wrong judgement, but also the accuracy of the frequency detection is decreased, such that the circuit design is relatively simple and the cost may be further reduced. The system of the invention may directly judge the pressure pressed down by the pen tip by sensing the "variation amount of frequency", so the needed circuit design is much simpler. It is also unnecessary to require more precise sensing technology, and the cost is lower.

For further describing the invention in detail, several preferable embodiments in matching with corresponding block diagrams are presented as follows.

## Brief Description of the Drawings

Fig. 1 is an illustration for the inductive loop of a digitizer tablet according to the prior arts.

Fig. 2 is a preferable embodiment for illustrating the inductive loops according to the present invention.

Fig. 3 is a preferable embodiment for the circuit block diagram according to the present invention.

Fig. 4 is a preferable embodiment for illustrating the waveforms according to the present invention.

Fig. 5 is a preferable embodiment for illustrating the internal circuit of the wireless pointer device according to the present invention.

Fig. 6 is a flow chart for the procedure according to the present invention.

## Detailed Description of the Invention

The main characteristic of the technical of the improving the circuits of the apparatus and method for pointer system of digitizer tablet according to the invention is to sequentially and respectively emit signal from a first set of inductive loop, of which the magnitude of the induced signal is the most strong, when the pointed position of a wireless pointer device is located within a predetermined range formed by the first set of inductive loop that has the strongest induced signal among several sets of inductive loop during a local scan being under processing. The emitted signal is received and energized temporarily by the wireless pointer device and then again emits a resonant signal, which is received sequentially by several sets of inductive loop at the adjacency of the first set of inductive loop, such that the coordinates of the wireless pointer device relative to digitizer tablet is calculated and the function and key status of the wireless pointer device is also sensed. Thereby, the intensities of the resonant signals received by the several sets of inductive loop will be in a linear relationship, so the calculation formula for the coordinates of pointer device and the circuit design for processing calculation can be simplified greatly, the production cost and the power consumption may further be reduced, and the shortcoming of the prior-art techniques can be improved effectively.

As a simple example, the invention is to provide a signal transferring method for the pointer system of a digitizer tablet, which includes a digitizer tablet and a wireless pointer device, wherein there are plural sets of inductive loop arranged sequentially in the digitizer tablet, and the wireless pointer device has a resonant circuit for energy storage. The method is comprised of following steps:

(A0) Processing a global scan to find the coarse position where the pointer device is located, dominated to $m^{th}$ inductive loop , wherein m is a positive integer;

(A) Emitting a first signal from the $m^{th}$ inductive loop, and the resonant circuit of the pointer device is induced by the first signal and the energy is storaged in the resonant circuit. After the time of a full storage energy interval, the $m^{th}$ inductive loop stop emitting, and then the pointer device emit the stored energy out;

(B) The $(m-n)^{th}$ inductive loop induced by the re-emitted energy which is emitted by the pointer device, wherein n is an integer and, if m-n is less than one, then Step (B) will be skipped;

(C) Increasing the (m-n) value sequentially, and execute Step (A) and Step (B) repetitiously until the $(m-n+i)^{th}$ inductive loop inducing the resonant signal that come from the pointer device, wherein i=2n+1 preferably;

(D) According to the resonant signals induced by the $(m-n)^{th}$ ~ $(m-n+i)^{th}$ inductive loops, it may calculate the coordinates of the wireless pointer device on the digitizer tablet relatively.

Furthermore, another characteristic of the invention is that the wireless pointer device includes a resonant circuit which comprises a variable inductor and several capacitors connected in parallel. The resonant circuit can be induced by the electromagnetic energy provided from the inductive loop of the digitizer tablet as an energy power source. The wireless pointer device also has a key switch connected in series with one of the capacitors and a pen tip brought along with the variable inductor. When this key switch is pressed, the resonant frequency of the resonant circuit will be decreased. Further, when the pen tip is pressed down, the inductance changing of the variable inductor will cause the resonant frequency of the resonant circuit to be increased. In other words, when the wireless pointer device according to the invention is processing the "pressing key" and the "pressing down the pen tip on the surface of the digitizer tablet", the trend of the variation of the resonant frequency caused by both operations will be in "reversing direction", so the operational functions of the "pressing key" and the "pressing down the pen tip on the surface of the digitizer tablet can be distinguished easily.

Further, because the "variable inductor" is brought along with the pen tip of the pointer device, the generated "the variation of the frequency" is larger when the pen tip is pressed down more, so the invention may directly judge the pressed down pressure of the pen tip by sensing the "the variation of the frequency". This technique is different from the prior arts that normally require to detect the "phase difference" of the frequency to decide the pressure of the pen tip. Therefore, because the pointer device according to the invention may bring along the "variable inductor" with the pen tip of the pointer device to make a frequency variation when the pen tip is pressed down, it may make the circuit design needed for the invention to detect the magnitude of the pressure of the pen tip to be much simpler, a more accurate detecting technology is not necessary, and the cost is lowered down relatively.

As presented in the following, several preferable embodiments matching with corresponding drawings will describe in detail about the technical characteristics, the motion manners, and the achievable functions of the invention.

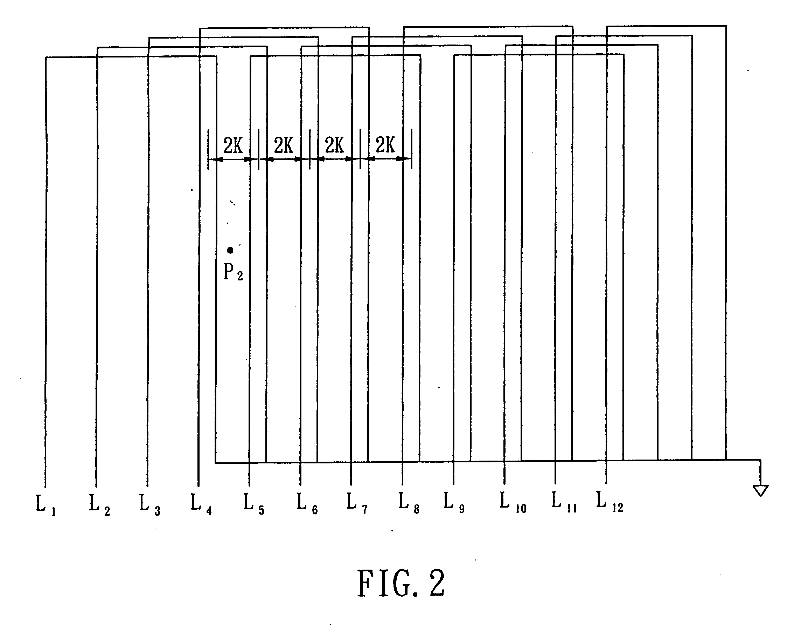

Please refer to Fig. 2, which is a preferable embodiment for illustrating the inductive loop on the digitizer tablet according to the invention, and this is only an illustration for the inductive loop belonged to one specific axial direction.

The procedure of the positioning for the coordinates of the wireless pointer device will be illustrated in two processing stages, which will be described respectively as follows:

(1) The global scanning stage: when the pointer system is not in the working area of the digitizer tablet, the processing circuits of the digitizer tablet will sequentially make detection for each inductive loop belonged to specific axis, so the digitizer tablet may accurately and quickly sense which inductive loop the position of the pointer device is located on, as soon as the pointer device is in proximity altitude above the working area of the digitizer tablet; if the global scanning process has sensed the coarse position which the pointer device is located on, then process the local scanning procedure. Since the global scanning process described herein is belonged to the prior arts and is not the key technique of the invention, so detailed description about the global scanning process is not presented thereinafter.

(2) The local scanning stage: only the several inductive loops at the adjacency of the inductive loop, on which the position of the pointer device is located, are under detection; the objectives of this stage are two: first, tracing the moving traces of the pointer device; second, calculating the accuracy coordinates of the pointer device in the working area. This local scanning stage is one emphasis of the invention, so a detailed description will be presented thereinafter.

Next, the following will describe the local scanning process according to the invention. As shown in Fig. 2, from the inductive loop L1 to the inductive loop L5, each has an initial terminal and also has an ending terminal connected to the ground in the same way, and each of which is formed as a loop range enclosing a specific area by starting from the initial terminal to the ending terminal, and the enclosed area for each inductive loop is made as similar as possible. In the preferable embodiment according to the invention, after global scanning, if the coarse position, on which the pointer device is located, is found and within the range decided by the inductive loop L3, then process the partial scan stage for finding the accuracy coordinates. The procedures are: an electromagnetic energy of a specific frequency is emitted from the inductive loop L3 at one certain time interval, called as the first time interval, sequentially, and the electromagnetic energy is induced by the L-C type resonant circuit of the pointer device and the energy is stored in the resonant circuit respectively. After the energy storage is completed, the inductive loop L1-L5 re-inducing the energy from the pointer device respectively at another certain time interval. The length of said first time interval is relevant to the quality factor of the L-C type resonant circuit of the pointer device. So, in order to achieve the best performance of energy storage for the resonant circuit, it needs more time to store the energy fully and, afterwards, the electromagnetic energy is stopped emitting from the inductive loop L3. At this time, the L-C type resonant circuit of the pointer device will release the electromagnetic energy originally stored therein into the adjacent space, and the released electromagnetic energy will be induced by the other adjacent inductive loops (L1-L5). After being induced by the inductive loops, this electromagnetic energy will be converted to an electrical signal in sine waveform. The processing procedure is described in detail thereinafter.

(I) The electromagnetic energy emitted from the inductive loop L3 is transferred to the pointer device, again from which the electromagnetic energy is transferred and is further induced by the inductive loop L1;

(II) The electromagnetic energy emitted from the inductive loop L3 is transferred to the pointer device, again from which the electromagnetic energy is transferred and is further induced by the inductive loop L2;

(III) The electromagnetic energy emitted from the inductive loop L3 is transferred to the pointer device, again from which the electromagnetic energy is transferred and is further induced by the inductive loop L3;

(IV) The electromagnetic energy emitted from the inductive loop L3 is transferred to the pointer device, again from which the electromagnetic energy is transferred and is further induced by the inductive loop L4;

(V) The electromagnetic energy emitted from the inductive loop L3 is transferred to the pointer device, again from which the electromagnetic energy is transferred and is further induced by the inductive loop L5;

In other words, if the position P2 of the pointer device is located in the range decided by the inductive loop L3, then the electromagnetic energy emitted every time from the same source-inductive loop L3 will store the most full and sufficient energy in the pointer device (generally speaking, the intensity of the magnetic field is proportional inversely to the distance square), so it is very efficient for the inductive loop L3 to emit an electromagnetic energy that is induced by each inductive loops at its adjacency of two sides, and the performance is most stable. Furthermore, since the electromagnetic energy is emitted out from same inductive loop L3 and is induced by other inductive loops (L1~L5), so the intensities of these signals induced by the inductive loops L1, L2, L3, L4, and L5 will be roughly in linear relationship for processing the coordinates calculation. This relationship will simplify the calculation formula and decrease the complexity of programming. And, it may further spend less time on processing signals, and may be in lower complication and cost for designing circuit.

As far as the coordinates calculation described above is concerned, for example, if L3 induce a largest inducing voltage, Voltage3, that is converted by an A/D converter to become a digital value of V3, and L2 induce an inducing voltage, Voltage2, that is converted by an A/D converter to become a digital value of V2 and, further, L4 induce an inducing voltage, Voltage4, that is converted by an A/D converter to become a digital value of V4, while K is the largest resolution constant (please refer to Fig. 2), then the calculation method for a specific position in certain axial direction is as follows:

When V2 > V4, then the position =

$$K-\{K(V2-V4)/[(V3-V2)+(V3-V4)]\};$$

When V2 < V4, then the position =

$$K-\{K(V4-V2)/[(V3-V2)+(V3-V4)]\};$$

When V2 = V4, then the position = K.

According to the above method, it can find the coordinates pointed by the pointer device located on the digitizer tablet.

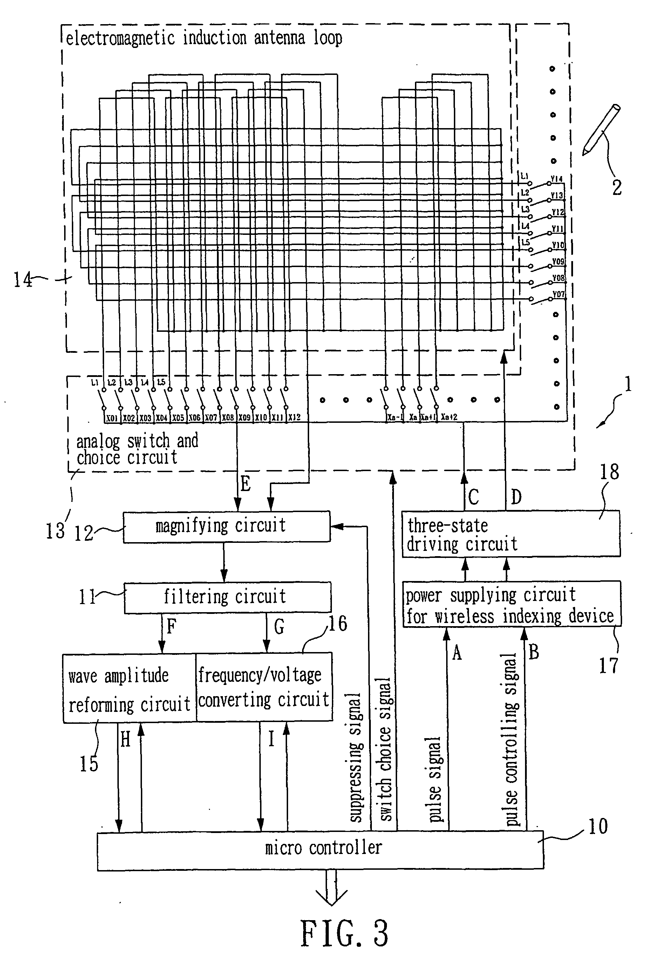

Please refer to Fig. 3, which is a preferred embodiment of circuit block diagram according to the invention. As shown in Fig. 3, the invention includes a digitizer tablet 1 and a wireless pointer device (for example, a wireless digitizer pen 2). The digitizer tablet 1 further includes several inductive loops 14 in the direction of X-axis and Y-axis, an analog switch and selection circuit 13, an amplification circuit 12, a filter circuit 11, a waveform generation circuit 15, a frequency to voltage converter circuit 17, a micro controller 10, a power supply circuit 17 for wireless pointer device, and a tri-state driving circuit 18.

Wherein, the digitizer tablet 1 has a working area (the working area is comprised of the inductive loops in the directions of X-axis and Y-axis), which may induce the electromagnetic energy emitted from the wireless pointer device 2 and generate inductive signals that may decide the coordinates where the wireless pointer device 2 is located. The several inductive loops 14 in the directions of X-axis and Y-axis are arranged sequentially and orderly and form the coordinate system in the directions of X-axis and Y-axis respectively. Of course, according to the working area of different sizes, the total count of the inductive loop is difference. As shown in Fig. 2 and Fig. 3, each one of the inductive loops L1, L2, L3, L4, L5... forms into a specific but different sensing range (Fig. 3 is only an illustration for showing the distances and sensing range among each inductive loops L1, L2, L3, L4, L5...). By weaving the X-axis's inductive loops and the Y-axis's inductive loops, a specific active area is formed, and the wireless pointer device 2 is induced if it is within the active area comprised by the inductive loops 14.

The analog switch and selection circuit 13, connected to the inductive loops 14, is controlled sequentially by the micro controller 10 to perform the global scan and the local scan process at both X and Y directions, such that it may receive sequentially and inductively the electromagnetic signals induced by different inductive loops, so the number of analog switches corresponds with the number of inductive loops 14. The function of the amplification circuit 12, receiving the signals come from analog switches, is to amplify the signals appropriately and output them to the band pass filter circuit. The function of the filter circuit 11, receiving the amplified signals output from the amplification circuit 12, is to filter them (cut off the signals whose frequency is out of the pass band). In this invention, it can be implemented by a high pass filter (HPF).

The function of the waveform generation circuit 15, which is controlled appropriately by the micro controller 10 and further send the signal to the built-in A/D converter (not shown in the Fig. 3) of the micro controller 10 for converting analog signal to digital signal, is to receive the signal output from the filter circuit 11 and output a signal which carry an amplitude information and this signal is to calculate the coordinates of the wireless pointer device. The function of the frequency to voltage converter circuit 16 is to convert the signal output from the filter circuit 11 to a signal whose voltage carry the frequency information, with processing this signal by the micro controller 10 appropriately, and send this signal to another built-in A/D converter circuit (not shown in Fig. 3) of the micro controller 10 to convert an analog signal to digital signal. This signal is relative to the function status of the wireless pointer device (for example, the pressure of pen tip, and the key switch status of mouse...). This set of coordinates and status will be stored temporarily in a RAM (Random Access Memory) of the micro controller 10 and then communicate to the host machine with the interface in a proper time slot. By the host machine's further process, this set of coordinates and status will be responded and shown on the display device of the host machine, which may be a computer system, an operational process system, or even a system that needs the cursor pointer or the input device of hand writing.

The micro controller 10 outputs a set of controlling signals, which will synchronize the processing timing. These signals will enable or disable the wireless pointer device's power supply circuit 17 and the tri-state driving circuit 18. The micro controller 10 yet outputs a pulse signal of a specific frequency, by controlling the enabling or disabling mechanism of the wireless pointer device's power supply circuit 17 and the tri-state driving circuit 18, which will be sent to the inductive loops 14 intermittently (as described above, the electromagnetic energy transmitting process is executed at one time slot and is inhibited at another time slot), by which the electromagnetic energy of a specific frequency may be scattered over the space at the adjacency; that is, with a specific frequency, the electromagnetic energy emitted from the power supply circuit 17 of the wireless pointer device, the tri-state driving circuit 18 and the inductive loops 14 is utilized as the power source of the wireless pointer device 2.

Furthermore, the micro controller 10 yet may respectively control the waveform generation circuit 15 and the frequency to voltage converter circuit 16 for deciding whether the micro controller 10 will process these signals transferred from the waveform generation circuit 15 and the frequency to voltage converter circuit 16. The micro controller 10 also output a set of selection signals to the analog switch and selection circuit 13 for selecting which analog switch is turned on. These selection signals may switch on a specific analog switch, and then may connect the specific inductive loop to the tri-state driving circuit 18 and the amplification circuit 12 for electromagnetic energy interacting. Moreover, the micro controller 10 may also output a signal to suppress the output of the amplification circuit 12 during the first time slot. The signal come from analog switch is useless for pointer device positioning in this duration. The function of the power supply circuit of the wireless pointer device 17 is to receive the pulse signal, with a specific frequency, output from the micro controller 10, by controlling the electromagnetic energy emitting and receiving circuit with a set of controlling signals, and transfer the pulse signal to the tri-state circuit 18. The tri-state driving circuit 18 is also controlled by the set of controlling signals, and output two signals out of phase by 180 ° at the same frequency.

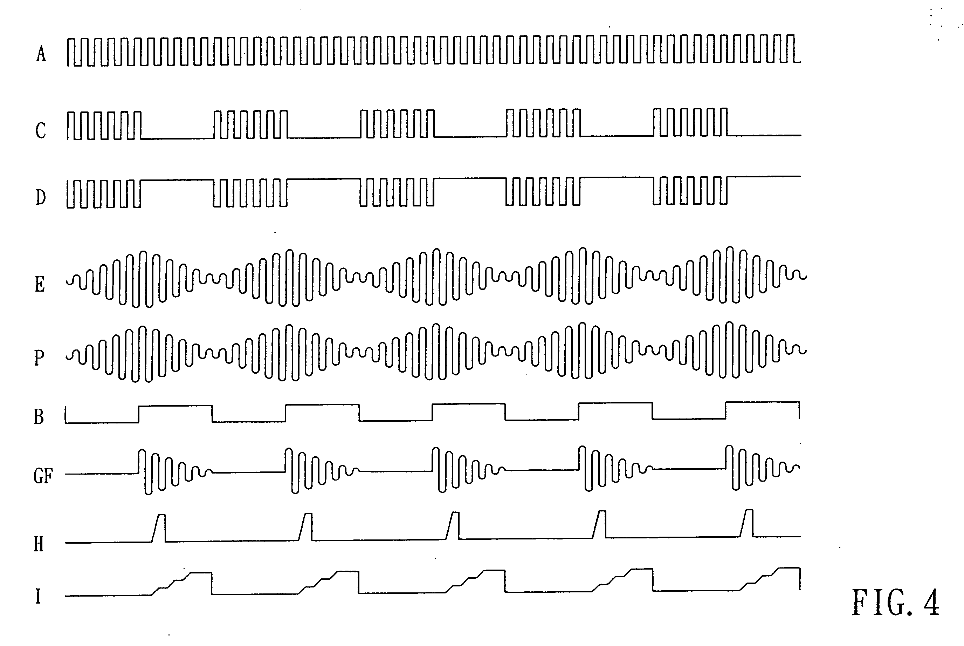

One of the two signals is transferred to a specific inductive loop, and another is transferred to the common line of all inductive loops. In other words, this circuit transmits the pulse signal energy into the nearby space with a specific inductive loop and the common line. Please refer to Fig. 4, which is a preferable embodiment for illustrating these waveforms of the invention. Wherein, each waveform, whose counts, timing and amplitude depend on the actual situation, is only an illustration for explanation. Please refer to Fig. 3, wherein A signal is a pulse signal output from the micro controller 10. B signal is a set of signals for controlling the enabling or disabling mechanism of the power supplying circuit 17 of the wireless pointer device. C signal and D signal are two signals output from the tri-state driving circuit 18. The E signal is a waveform of the electromagnetic signal emitted and received from a specific inductive loop that passing through the specific analog switch. F and G signals are the output waveforms that has been controlled appropriately, filtered and amplified. As refer to E signal, the front half section of the waveform of the F and G signal is cutting off (p.s. because it is in energy-emitting time slot and there is not useful information in the part of the waveform, it is cut off). H signal, of which the amplitude is inversely proportion to the distance between the inductive loop and the pointer device, has been processed. So, this signal carries the position information. This signal will be sent to the A/D converter circuit of the micro controller 10 to convert analog signal to digital signal. The I signal, of which the amplitude is related with frequency, will be transferred to the built-in A/D converter circuit of the micro controller 10 and then convert analog signal to digital signal. So, this signal carries the pen tip's pressure and key status information. The P signal, not shown in the Fig. 3, is measured from the pointer device's circuit. It is quite obvious that this signal is similar to the E signal.

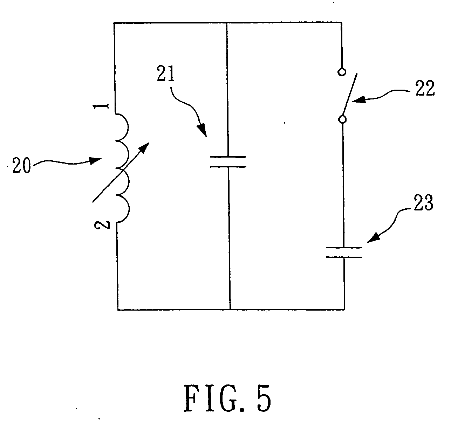

Please refer to Fig. 5, which is a preferred embodiment for the illustration of the circuit of the wireless pointer device according to the invention. As shown in Fig. 5, which is a circuit design meet this invention for power supply, and which is a resonant circuit constructed in parallel by a variable inductor 20 and two capacitors 21, 23. The resonant circuit induces the electromagnetic energy supplied from the digitizer tablet as a power source. Switch 22 is a key switch. When this switch is turned on, a small capacitor 23 will be paralleled to the resonant circuit and the resonant frequency will change a little (when the switch is pressed, the resonant frequency will decrease). By the frequency to voltage converter circuit 16 converting, the different frequency will be converted into different voltage. The key feature of the invention is that the inductor 20 is a variable inductor. Since the variety of the variable inductor is larger than that of the variable capacitor, so it does not the main consideration when design this circuit. Further, the action of the variable inductor according to the invention is that when the user presses the pen tip of this pointer device upon the surface of the digitizer tablet, the inductance will decrease and the resonant frequency will increase. In other words, when the wireless pointer device is in the "pressing key switch" working function and the "pressing the pen tip down" working function, the trends of the variation of the resonant frequency are different and these functions will be distinguished easily. In such way, we can set the frequency range roughly and distinguish these functions from each other without fault. And, the design of the pointer device in this invention doesn't need any battery as the power source. The wireless pointer device according to the invention may be a wireless and batteryless stylus a wireless & batteryless digitizer pen, a wireless & batteryless mouse, and a wireless & batteryless puck, etc.

In addition, according to the invention, the pen tip of the pointer device is work along with the variable inductor, and the variation of inductance and frequency are wider. Therefore, we can know what function be executed not by detecting the phase difference but by detecting the variation of frequency. Thus, this circuit is very simple, skill-less, accuracy-less and low cost to implement these functions, pressing key switch and pressing the pen tip down, with this variable inductor 20. Another particular issue is that although the pointer device is consisted of only one set of one capacitor or more in series with a specific switch shown in preferable embodiment, it is doubtless that if there are more than one switch is consisting of the pointer device and then the pointer device is consisted of more than one set of that.

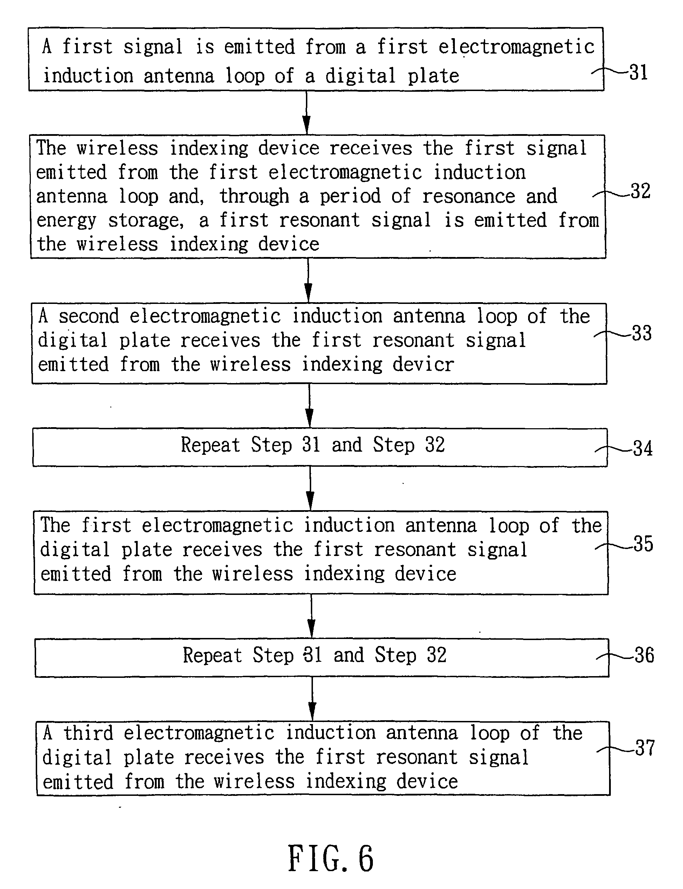

Please refer to Fig. 6, which is a flow chart diagram according to the invention. There is an algorithm in partial scan procedure, referring the detail descriptions of the Fig. 2, besides the circuit of the pointer device that we mentioned above. The improved method for exchanging the signal between the wireless pointer device and the digitizer tablet is applied with the inductive loops and the wireless pointer device. The procedures of the signal exchanging are shown below:

a. A first signal is emitted from a first inductive loop of a digitizer tablet (Step 31);

b. The wireless pointer device is induced the first signal emitted from the first inductive loop and, after a time slot for energy storing, a first resonant signal is emitted from the wireless pointer device (Step 32);

c. A second inductive loop of the digitizer tablet is induced the first resonant signal emitted from the wireless pointer device (Step 33);

d. Repeat Step 31 and Step 32 (Step 34);

e. The first inductive loop of the digitizer tablet is induced the first resonant signal emitted from the wireless pointer device (Step 35);

f. Repeat Step 31 to Step 32 (Step 36);

g. A third inductive loop of the digitizer tablet is induced the first resonant signal emitted from the wireless pointer device (Step 37).

Wherein, the first inductive loop said in Step a is correspondent to the inductive loop L3 said in Fig 2 concerning the local scan.

Wherein, the second inductive loop said in Step c is referred sequentially to: inductive loop L 1 (when Step a and Step b are executed twice), inductive loop L2 (when Step 1 and Step b are executed once).

Wherein, the third e inductive loop said in Step g is referred sequentially to: inductive loop L4 (when Step f and Step g are executed once), inductive loop L5 (when Step f and Step g are executed twice).

As a summary, the invention discloses an improved partial scan process for a digitizer pointer system which includes a wireless digitizer pointer and a digitizer tablet. With these approaches, inductive loops layout, energy exchange method, the device of variable inductor, the coordinates calculating with linear relationship, the filter circuit and different frequency variation trend of the "pressing key" and "pressing the pen tip down", we can improve the prior art's disadvantage. The important features of this invention are all disclosed in detail in each preferable embodiment. It is sufficient and apparent that the objections and efficiencies of this invention are progressive, easy to implement and economical value in production. And, the products, with this invention, are never manufactured to current market.

**Claims**

1. A signal transmitting method for the pointer system of a digitiser tablet (1) having a wireless pointer device (2), the digitiser tablet having a plurality of sets of electromagnetic inductive loops (14) arranged in order, and the wireless pointer device having an energy-storing resonant circuit, the method comprising the following steps:

   (A) emitting a first signal from an $m^{th}$ set of the electromagnetic inductive loops of the digitiser tablet, and emitting a resonant signal from the energy-storing resonant circuit of the wireless pointer device after resonation and energy storing, m being a positive integer;
   (B) receiving the resonant signal with the $(m-n)^{th}$ set of the electromagnetic loops of the digitiser tablet, n being an integer;
   (C) increasing the value of (m-n) progressively, repeating steps (A) and (B) until the $(m-n+i)^{th}$ set of the electromagnetic inductive loops receives the resonant signal, i being a positive integer; and
   (D) calculating the relative coordinate position of the digitiser tablet of the wireless pointer device according to resonant signals received by the $(m-n)^{th}$ to $(m-n+i)^{th}$ set of the electromagnetic inductive loops of the digitiser tablet; **characterised in that**
   the wireless pointer device has a resonant circuit (20, 21, 23) in which a variable inductance (20) is in parallel with at least two capacitances (21, 23), the resonant circuit inducting and receiving electromagnetic energy provided by the electromagnetic inductive loops as a source of energy; the wireless pointer device also has a key switch (22) in series connection with one of the capacitances and a pen nib connected with the variable inductance; whereby, when the key switch is switched on, the resonant frequency of the resonant circuit decreases and, when the pen nib is pressed down, variation of the variable inductance increases the resonant frequency of the resonant circuit.

2. A method as claimed in claim 1, further comprising the step, carried out prior to the step (A), of carrying out a global scan for initial identification that the wireless pointer device (2) is relatively close to a predetermined electromagnetic inductive loop (14) of the digitiser tablet (1), the initially identified electromagnetic inductive loop being the $m^{th}$ inductive loop.

3. A method as claimed in claim 1 or claim 2, wherein, when the value of (m-n) is less than 1, step (B) is omitted; in addition, the intensity of the resonant signals received by the $(m-n)^{th}$ to $(m-n+i)^{th}$ set of electromagnetic inductive loops changes according to a linear relationship.

4. A method as claimed in any one of claims 1 to 3, wherein i=2n+1.

5. A pointer system for a digitiser tablet, the system comprising:

   a wireless pointer device (2); and
   a digitiser tablet (1) comprising:

      an electromagnetic inductive loop having several inductive loops (14) in the X-axis and Y-axis directions of the coordinate system, each electromagnetic loop forming a specific inductive scope;
      an analogue switch and selecting circuit (13) connected to the electromagnetic inductive loop, and being able to control induction of the inductive loops in the X-axis and Y-axis directions through a microprocessor (10), the number of switches being dependent upon the number of the inductive loops;
      an amplifying circuit (12), receiving a suppressing signal from the microprocessor and output inductive signals from the analogue switch and selecting circuit and the electromagnetic inductive loop, the amplifying circuit amplifying and then outputting the signals;
      a filtering circuit (11) for receiving a signal output by the amplifying circuit and for outputting a filtered signal to the microprocessor;

a waveform amplitude regulating circuit (15) for receiving the signal output by the filtering circuit, and for outputting an amplitude-regulated signal to the microprocessor;

a frequency/voltage converting circuit (16) for receiving signals output by the filtering circuit, and for converting such signals into voltage signals, and for sending said voltage signals to the microprocessor for processing, the voltage signals being saved temporarily in the microprocessor after being processed;

a power supply circuit (17) for receiving a pulse wave controlling signal and a pulse wave signal of specific frequency output by the microprocessor, and the energy source of the wireless pointer device is supplied by the pulse wave signal of specific frequency and the electromagnetic inductive loop; and

a tri-state driving circuit (18) for receiving the output of the power supply circuit, and for outputting two sets of inverting signals of logical level respectively to the analogue switch and selecting circuit and to the electromagnetic inductive loop for enhancing the pulse wave signal of certain frequency; and

wherein the microprocessor can control and receive signals from the waveform amplitude regulating circuit and the frequency/voltage converting circuit, and can process signals received; **characterised in that** the wireless pointer device has a resonant circuit (20, 21, 23) in which a variable inductance (20) is in parallel with at least two capacitance (21, 23), the resonant circuit inducting and receiving electromagnetic energy provided by the inductive loops as a source of energy; the wireless pointer device also having a key switch (22) in series connection with one of the capacitances and a pen nib connected with the variable inductance; whereby, when the key switch is switched on, the resonant frequency of the resonant circuit decreases; and, when the pen nib is pressed down, the variation of the variable inductance increases the resonant frequency of the resonant circuit.

6. A system as claimed in claim 5, wherein there are a plurality of sets of inductive loops (14) induced by the wireless pointer device (2), the positions of which are pointed out by the pointer device and are in a pre-set section formed by a certain set of inductive loops having the most intensive induction among said several sets of inductive loops, said certain set of inductive loops emitting signals repeatedly and for a plurality of times, the energy-storing and resonating process being carried out on said signals by the wireless pointer device that then emits corresponding resonant signals, and a plurality of sets of inductive loops located close to said certain set of inductive loops receive said resonant signal transmitted by the wireless pointer device respectively.

7. A method as claimed in claim 1, wherein the signals are transmitted between the digitiser tablet and the wireless pointer device, electromagnetic inductive loops in the X-axis and the Y-axis directions of the coordinate system being set on a circuit board of the digitiser tablet to induct electromagnetic signals, a full scan being carried out before the digitiser tablet inducts and detects the wireless pointer device, a partial scan being carried out after the full scan identifies the inductive loop where the wireless pointer device is located, the position indicated by the pointer device being in a pre-set section formed by a first set of inductive loops having the most intensive induction, the first set of inductive loops emitting signals repeatedly at a first time interval, the wireless pointer device carrying out an energy-storing and resonating process, and then emitting corresponding resonant signals, and several sets of inductive loops located close to the first set of inductive loops receiving the resonant signals at a second time interval, the resonant circuit inducting and receiving electromagnetic energy provided by the electromagnetic inductive loops as a source of energy.

**Patentansprüche**

1. Signalübertragungsverfahren für das Zeigesystem eines Digitalisiertabletts (1) mit einer schnurlosen Zeigevorrichtung (2), wobei das Digitalisiertablett (1) eine Vielzahl von geordneten Sätzen von elektromagnetischen Induktionsschleifen (14) hat, und wobei die schnurlose Zeigevorrichtung einen Energiespeicher-Resonanzschaltkreis hat, wobei das Verfahren die folgenden Schritte umfasst:

(A) Emittieren eines ersten Signals eines m-ten Satzes der elektromagnetischen Induktionsschleifen des Digitalisiertabletts, und Emittieren eines Resonanzsignals von dem Energiespeicher-Resonanzschaltkreis der schnurlosen Zeigevorrichtung nach der Resonanz und der Energiespeicherung, wobei m eine positive Zahl ist;

(B) Empfangen des Resonanzsignals mit dem (m-n)-ten Satz der elektromagnetischen Schleifen des Digitalisiertabletts, wobei n eine ganze Zahl ist;

(C) Progressives Erhöhen des Wertes von (m-n), Wiederholen der Schritte (A) und (B) bis der (m-n+i)-te Satz der elektromagnetischen Induktionsschleifen das Resonanzsignal empfängt, wobei i eine positive ganze Zahl ist; und

(D) Berechnen der relativen Koordinatenposition des Digitalisiertabletts der schnurlosen Zeigevorrichtung entsprechend der Resonanzsignale, welche durch die (m-n)-ten bis (m-n+i)-ten Sätze der elektromagnetischen Induktionsschleifen des Digitalisiertabletts empfangen werden;

**dadurch gekennzeichnet,**
**dass** die schnurlose Zeigevorrichtung einen Resonanzkreis (20, 21, 23) hat, bei dem eine variable Induktivität (20) parallel zu wenigstens zwei kapazitiven Widerständen (21, 23) ist, wobei der Resonanzkreis elektromagnetische Energie induziert und empfängt, welche durch die elektromagnetischen Induktionsschleifen als eine Energiequelle bereit gestellt wird; wobei die schnurlose Zeigevorrichtung auch einen Schalter (22), welcher in Reihe mit einem der kapazitiven Widerständen verbunden ist, und eine Stiftspitze hat, welche mit der variablen Induktivität verbunden ist; wobei, wenn der Schalter eingeschaltet ist, die Resonanzfrequenz des Resonanzkreises abfällt und, wenn die Stiftspitze herunter gedrückt wird, die Veränderung der variablen Induktivität die Resonanzfrequenz des Resonanzkreises erhöht.

2. Verfahren nach Anspruch 1, ferner umfassend den Schritt, ausgeführt vor dem Schritt (A), zum Durchführen eines globalen Scannens für die anfängliche Identifikation, da die schnurlose Zeigevorrichtung (2) relativ nahe an einer vorbestimmten elektromagnetischen Induktionsschleife (14) des Digitalisiertabletts (1) ist, wobei die anfänglich identifizierte elektromagnetische Induktionsschleife die m-te Induktionsschleife ist.

3. Verfahren nach Anspruch 1 oder 2, wobei, wenn der Wert von (m-n) kleiner als 1 ist, der Schritt (B) ausgelassen wird; zudem wird die Intensität der Resonanzsignale, welche durch die (m-n)-ten bis (m-n+i)-ten Sätze der elektromagnetischen Induktionsschleifen empfangen werden, entsprechend einer linearen Beziehung verändert.

4. Verfahren nach einem der Ansprüche 1 bis 3, wobei i=2n+1 ist.

5. Zeigesystem für ein Digitalisiertablett, wobei das System umfasst:

eine schnurlose Zeigevorrichtung (2); und
ein Digitalisiertablett (1), umfassend:

eine elektromagnetische Induktionsschleife mit mehreren Induktionsschleifen (14) in der X-Achsen- und Y-Achsen-Richtung des Koordinatensystems, wobei jede elektromagnetische Schleife einen spezifischen induktiven Bereich bildet;
einen analogen Schalt- und Auswahlkreis (13), welcher mit der elektromagnetischen Induktionsschleife verbunden ist, und in der Lage ist, die Induktion der Induktionsschleifen in der X-Achsen- und Y-Achsen-Richtung durch einen Mikroprozessor (10) anzusteuern, wobei die Anzahl der Schalter abhängig von der Anzahl der Induktionsschleifen ist;
einen Verstärkungskreis (12), welcher ein Unterdrückungssignal von dem Mikroprozessor empfängt und induktive Signale von dem Analogschalt- und Auswahlkreis und den elektromagnetischen Induktionsschleifen ausgibt, wobei der Verstärkungskreis die Signale verstärkt und dann ausgibt;
einen Filterkreis (11) zum Empfangen eines Signals, welches durch den Verstärkungskreis ausgegeben wird, und zum Ausgeben eines gefilterten Signals an den Mikroprozessor;
ein Wellenform-Amplitudenregulierungskreis (15) zum Empfangen des Signals, welches durch den Filterkreis ausgegeben wird, und zum Ausgeben eines amplitudenregulierten Signals an den Mikroprozessor;
einen Frequenz/Spannung-Umwandlungskreis (16) zum Empfangen von Signalen, welche durch den Filterkreis ausgegeben werden, und zum Umwandeln derartiger Signale in Spannungssignale, und zum Senden dieser besagten Spannungssignale an den Mikroprozessor zur Verarbeitung, wobei die Spannungssignale zeitweise in dem Mikroprozessor nach der Verarbeitung gespeichert werden; einen Energieversorgungskreis (17) zum Empfangen eines Impulswellenansteuersignals und eines Impulswellensignals mit spezifischer Frequenz, welche durch den Mikroprozessor ausgegeben werden, und wobei die Energiequelle der schnurlosen Zeigevorrichtung durch das Impulswellensignal mit spezifischer Frequenz und die elektromagnetische Induktionsschleife versorgt wird; und
ein Dreizustands-Antriebskreis (18) zum Empfangen der Ausgabe des Energieversorgungskreises, und zum Ausgeben zweier Sätze von invertierten Signalen des logischen Levels entsprechend zu dem analogen Schalt- und Auswahlkreis und zu der elektromagnetischen Induktionsschleife zum Steigern des Impulswellensignals einer bestimmten Frequenz; und

wobei der Mikroprozessor die Signale von dem WellenformAmplituden-Regulierungskreis und dem Frequenz/Spannung-Umwandlungskreis ansteuern und empfangen kann, und die empfangenen Signale verarbeiten kann;

**dadurch gekennzeichnet,**

**dass** die schnurlose Zeigevorrichtung einen Resonanzkreis (20, 21, 23) hat, bei dem eine variable Induktivität (20) parallel mit zumindest zwei kapazitiven Widerständen (21, 23) ist, wobei der Resonanzkreis elektromagnetische Energie induziert und empfängt, welche durch die Induktionsschleifen als eine Energiequelle bereit gestellt wird; wobei die schnurlose Zeigevorrichtung auch einen Schalter (22), der in Reihe mit einem der kapazitiven Widerstände verbunden ist, und eine Stiftspitze hat, welche mit der variablen Induktivität verbunden ist; wobei, wenn der Schalter eingeschaltet ist, die Resonanzfrequenz des Resonanzkreises abfällt; und, wenn die Stiftspitze herunter gedrückt wird, die Veränderung der variablen Induktivität die Resonanzfrequenz des Resonanzkreises erhöht.

6.  System nach Anspruch 5, wobei eine Vielzahl von Sätzen von Induktionsschleifen (14) vorgesehen sind, welche durch die schnurlose Zeigevorrichtung (2) induziert werden, wobei die Positionen von diesen durch die Zeigevorrichtung angezeigt werden und in einem vorgegebenen Abschnitt sind, welcher durch einen bestimmten Satz von Induktionsschleifen mit der höchsten intensiven Induktion unter den besagten verschiedenen Sätzen der Induktionsschleifen gebildet wird, wobei der besagte bestimmte Satz der Induktionsschleifen Signale wiederholt und zu einer Vielzahl von Zeitpunkten emittiert, wobei die Energiespeicher- und Resonanzverarbeitung an den besagten Signalen durch die schnurlose Zeigevorrichtung durchgeführt wird, welche dann die korrespondierenden Resonanzsignale emittiert, und eine Vielzahl von Sätzen von Induktionsschleifen, welche nahe an dem besagten bestimmten Satz der Induktionsschleifen angeordnet ist, das besagte Resonanzsignal empfangen, welches jeweils durch die schnurlose Anzeigevorrichtung übertragen wird.

7.  Verfahren nach Anspruch 1, wobei die Signale zwischen dem Digitalisiertablett und der schnurlosen Anzeigevorrichtung übertragen werden, wobei die elektromagnetischen Induktionsschleifen in der X-Achsen- und der Y-Achsen-Richtung des Koordinatensystems an einem Schaltkreis des Digitalisiertabletts eingestellt sind, um elektromagnetische Signale zu induzieren, wobei ein vollständiges Scannen bzw. Abtasten durchgeführt wird, bevor das Digitalisiertablett die schnurlose Zeigevorrichtung induziert und detektiert, wobei ein teilweises Scannen durchgeführt wird, nachdem das vollständige Scannen die Induktionsschleife identifiziert, wo die schnurlose Zeigevorrichtung angeordnet ist, wobei die durch die Anzeigevorrichtung angezeigte Position in einem vorgegebenen Abschnitt ist, welcher durch einen ersten Satz von Induktionsschleifen mit der höchsten intensiven Induktion gebildet wird, wobei der erste Satz der Induktionsschleifen die Signale wiederholend bei einem ersten Zeitintervall emittiert, wobei die schnurlose Zeigevorrichtung eine Energiespeicher- und Resonanzverarbeitung ausführt und dann die korrespondierenden Resonanzsignale emittiert, und verschiedene Sätze von Induktionsschleifen, welche nahe des ersten Satzes der Induktionsschleifen angeordnet sind, die Resonanzsignale in einem zweiten Zeitintervall empfangen, wobei der Resonanzkreis die elektromagnetische Energie induziert und empfängt, welche durch die elektromagnetischen Induktionsschleifen als eine Energiequelle bereit gestellt wird.

**Revendications**

1.  Procédé de transmission de signal pour le système de pointeur d'une tablette de numériseur (1) ayant un dispositif de pointeur sans fil (2), la tablette de numériseur ayant une pluralité d'ensembles de boucles inductives électromagnétiques (14) agencées dans l'ordre, et le dispositif de pointeur sans fil ayant un circuit résonant de stockage d'énergie, le procédé comprenant les étapes suivantes :

    (A) l'émission d'un premier signal d'un $m^{ième}$ ensemble des boucles inductives électromagnétiques de la tablette de numériseur et l'émission d'un signal résonant depuis le circuit résonant de stockage d'énergie du dispositif pointeur sans fil après la résonance et le stockage d'énergie, m étant un entier positif ;
    (B) la réception du signal résonant avec le $(m-n)^{ième}$ ensemble des boucles électromagnétiques de la tablette de numériseur, n étant un entier ;
    (C) l'augmentation de la valeur de (m-n) progressivement, la répétition des étapes (A) et (B) jusqu'à ce que le $(m-n+i)^{ième}$ ensemble des boucles inductives électromagnétiques reçoive le signal résonant, i étant un entier positif ; et
    (D) le calcul de la position de coordonnée relative de la tablette de numériseur du dispositif pointeur sans fil selon les signaux résonants reçus par les $(m-n)^{ième}$ à $(m-n+i)^{ième}$ ensembles des boucles inductives électromagnétiques de la tablette de numériseur ; **caractérisé en ce que**

le dispositif pointeur sans fil a un circuit résonant (20, 21, 23) dans lequel une inductance variable (20) est en parallèle avec au moins deux capacités (21, 23), le circuit résonant formant une induction et recevant l'énergie électromagnétique produite par les boucles inductives électromagnétiques comme une source d'énergie ; le dispositif pointeur sans fil comporte également une serrure à contact (22) en communication en série avec une des capacités et une pointe de stylo connectée avec l'inductance variable ; ce qui entraîne que, lorsque la serrure à contact est activée, la fréquence de résonance du circuit résonant diminue et, lorsque la pointe de stylo est pressée, une variation de l'inductance variable augmente la fréquence de résonance du circuit résonant.

**2.** Procédé selon la revendication 1, comprenant en outre l'étape, effectuée avant l'étape (A), consistant à réaliser un balayage global pour une identification initiale selon laquelle le dispositif pointeur sans fil (2) est relativement proche d'une boucle inductive électromagnétique prédéterminée (14) de la tablette de numériseur (1), la boucle inductive électromagnétique identifiée initialement étant la $m^{\text{ième}}$ boucle inductive.

**3.** Procédé selon la revendication 1 ou la revendication 2, dans lequel, lorsque la valeur de (m-n) est inférieure à 1, l'étape (B) est omise; de plus, l'intensité des signaux résonants reçus par les $(m-n)^{\text{ième}}$ à $(m-n+i)^{\text{ième}}$ ensembles des boucles inductives électromagnétiques change selon une relation linéaire.

**4.** Procédé selon l'une quelconque des revendications 1 à 3, dans lequel i = 2n+1.

**5.** Système de pointeur pour une tablette de numériseur, le système comprenant :

un dispositif pointeur sans fil (2) ; et
une tablette de numériseur (1) comprenant :

une boucle inductive électromagnétique ayant plusieurs boucles inductives (14) dans les directions de l'axe X et de l'axe Y du système de coordonnées, chaque boucle électromagnétique formant un cadre inductif spécifique ;
un circuit de commutation et de sélection analogue (13) connecté à la boucle inductive électromagnétique, et étant capable de contrôler l'induction des boucles inductives dans les directions de l'axe X et de l'axe Y à travers un microprocesseur (10), le nombre de commutateurs dépendant du nombre de boucles inductives ;
un circuit d'amplification (12), recevant un signal de suppression du microprocesseur et des signaux inductifs de sortie du circuit de commutation et de sélection analogue et la boucle inductive électromagnétique, le circuit d'amplification amplifiant et ensuite émettant en sortie les signaux ;
un circuit de filtrage (11) pour recevoir un signal de sortie du circuit d'amplification et pour émettre en sortie un signal filtré au microprocesseur ;
un circuit de régulation d'amplitude de forme d'onde (15) pour recevoir le signal sorti par le circuit de filtrage et pour émettre en sortie un signal à amplitude régulée vers le microprocesseur ;
un circuit de conversion fréquence / tension (16) pour recevoir des signaux sortis par le circuit de filtrage et pour convertir de tels signaux en signaux de tension et pour envoyer lesdits signaux de tension au microprocesseur pour traitement, les signaux de tension étant sauvegardés temporairement dans le microprocesseur après avoir été traités ;
un circuit de fourniture de courant (17) pour recevoir un signal de contrôle d'onde d'impulsion et un signal d'onde d'impulsion de fréquence spécifique sortis par le microprocesseur, et la source d'énergie du dispositif pointeur sans fil est alimentée par le signal d'onde d'impulsion de fréquence spécifique et la boucle inductive électromagnétique ; et
un circuit d'entraînement à trois états (18) pour recevoir la sortie du circuit de fourniture de courant et pour émettre en sortie deux ensembles de signaux d'inversion de niveau logique respectivement vers le circuit de commutation et de sélection analogue et vers la boucle inductive électromagnétique pour améliorer le signal d'onde d'impulsion d'une certaine fréquence ; et

dans lequel le microprocesseur peut contrôler et recevoir des signaux du circuit de régulation d'amplitude de forme d'onde et le circuit de conversion fréquence / tension et peut traiter des signaux reçus ; **caractérisé en ce que** le dispositif pointeur sans fil comporte un circuit résonant (20, 21, 23) dans lequel une inductance variable (20) est en parallèle avec au moins deux capacités (21, 23), le circuit résonant formant une induction et recevant l'énergie électromagnétique produite par les boucles inductives comme une source d'énergie ; le dispositif pointeur sans fil comportant également une serrure à contact (22) en connexion en série avec une des capacités et une pointe de stylo connectée avec l'inductance variable ; ce qui entraîne que lorsque la serrure à contact est activée, la fréquence de résonance du circuit résonant diminue ; et lorsque la pointe de stylo est pressée, la variation de l'inductance variable augmente la fréquence de résonance du circuit résonant.

**6.** Système selon la revendication 5, dans lequel il existe une pluralité d'ensembles de boucles inductives (14) induites par le dispositif pointeur sans fil (2), dont les positions sont pointées par le dispositif pointeur et sont dans une section prédéfinie formée par un certain ensemble de boucles inductives ayant l'induction la plus intense parmi lesdits plusieurs ensembles de boucles inductives, ledit certain ensemble de boucles inductives émettant des signaux de manière répétée et une pluralité de fois, le processus de stockage d'énergie et de résonance étant effectué sur lesdits signaux par le dispositif pointeur sans fil qui émet ensuite des signaux résonants correspondants et une pluralité d'ensembles de boucles inductives situées à proximité dudit certain ensemble de boucles inductives reçoit ledit signal résonant transmis par le dispositif pointeur sans fil, respectivement.

**7.** Procédé selon la revendication 1, dans lequel les signaux sont transmis entre la tablette de numériseur et le dispositif pointeur sans fil, des boucles inductives électromagnétiques dans les directions de l'axe X et de l'axe Y du système de coordonnées étant placées sur une carte de circuit de la tablette de numériseur pour induire des signaux électromagnétiques, un balayage global étant effectué avant que la tablette de numériseur n'induise et ne détecte le dispositif pointeur sans fil, un balayage partiel étant effectué une fois que le balayage total identifie la boucle inductive dans laquelle le dispositif pointeur sans fil est situé, la position indiquée par le dispositif pointeur étant dans une section prédéfinie formée par un premier ensemble de boucles inductives ayant l'induction la plus intense, le premier ensemble de boucles inductives émettant des signaux de manière répétée à un premier intervalle de temps, le dispositif pointeur sans fil effectuant un processus de stockage d'énergie et de résonance et émettant ensuite des signaux résonants correspondants et plusieurs ensembles de boucles inductives situés à proximité du premier ensemble de boucles inductives recevant les signaux résonants à un second intervalle de temps, le circuit résonant produisant une induction et recevant l'énergie électromagnétique produite par les boucles inductives électromagnétiques comme une source d'énergie.

FIG. 1
(PRIOR ART)

EP 1 413 975 B1

FIG. 2

electromagnetic induction antenna loop

analog switch and choice circuit

magnifying circuit

filtering circuit

wave amplitude reforming circuit

frequency/voltage converting circuit

three-state driving circuit

power supplying circuit for wireless indexing device

suppressing signal

switch choice signal

pulse signal

pulse controlling signal

micro controller

FIG. 3

FIG. 4

EP 1 413 975 B1

FIG. 5

A first signal is emitted from a first electromagnetic induction antenna loop of a digital plate ⌐31

The wireless indexing device receives the first signal emitted from the first electromagnetic induction antenna loop and, through a period of resonance and energy storage, a first resonant signal is emitted from the wireless indexing device ⌐32

A second electromagnetic induction antenna loop of the digital plate receives the first resonant signal emitted from the wireless indexing devicr ⌐33

Repeat Step 31 and Step 32 ⌐34

The first electromagnetic induction antenna loop of the digital plate receives the first resonant signal emitted from the wireless indexing device ⌐35

Repeat Step 31 and Step 32 ⌐36

A third electromagnetic induction antenna loop of the digital plate receives the first resonant signal emitted from the wireless indexing device ⌐37

FIG. 6